# EUROPEAN PATENT APPLICATION

(11) **EP 4 366 101 A1**
(43) Date of publication of application: **08.05.2024**
(21) Application number: 23204963.5
(22) Date of filing: 20.10.2023
(51) Int. Cl.: H02G 3/08, H02G 3/12, H02G 3/14

(54) **HOUSING KIT FOR HOME AUTOMATION DEVICES AND INTEGRATED HOME AUTOMATION DEVICE**

(30) Priority: 02.11.2022 IT 202200004485 U
(71) Applicant: Microdevice S.r.l., 25020 Flero (BS) (IT)
(72) Inventor: ABRAMI, Claudio, 25020 Flero (BS) (IT); PIVA, Marco, 25020 Flero (BS) (IT)
(74) Representative: Marietti, Andrea

(57) **Abstract**

The invention concerns a housing kit for home automation devices, wherein the aforesaid kit is configured to be mounted and installed inside a hollow space (11) formed inside a wall of a building room or space, wherein the aforesaid kit comprises at least one plate (9) at least partially made of magnetic or ferromagnetic material, and wherein such at least one plate (9) can be fastened within the hollow space (11) of the wall of the room or space, and a home automation device (16, 25, 26) comprising a housing shell (16) for one or more home automation components (25, 26), wherein said home automation device (16, 25, 26) is shaped so that it can be inserted into the hollow space (11), characterised in that said housing shell (16) comprises one or more magnets (18, 19) for the removable connection of said home automation device (16, 25, 26) to at least said at least one plate (9), next to at least one side of said home automation device (16, 25, 26) arranged inside said hollow space (11).

## Description

### FIELD OF THE INVENTION

The present invention relates to a housing kit for home automation devices inside a wall and a home automation device which is/can be integrated into a wall.

In particular, the present invention relates to a housing kit for home automation devices inside a wall, i.e. a kit which, once mounted and installed, is adapted to house home automation devices, i.e. electrical/electronic components of home automation type, for home or office use, in particular for applications for automating or controlling the operation of electrical loads or other loads, which are placed within a respective casing or shell.

The present invention also relates to a home automation device, i.e. an assembly consisting of the aforesaid electrical/electronic components of home automation type placed in a respective casing, or shell, that can be installed inside a wall.

In particular, but not exclusively, the housing kit for home automation devices and the home automation device of the present invention can be installed inside a plasterboard wall.

### KNOWN PRIOR ART

As known, home automation is the discipline that deals with the study of technologies adapted to improve the quality of life in home and offices.

This highly interdisciplinary area requires the contribution of many technologies and professions, including construction engineering, architecture, energy engineering, management engineering, automation, electrical engineering, electronics, telecommunications, information technology and design.

Many applications for home automation are known, which operate through control means on electrical loads combined with home or office systems.

In the present description, the general term "control means" refers to any device adapted to regulate, in a preferably automatic manner and following one or more commands imparted by the operator and/or one or more signals coming from special environmental sensors, the voltage or intensity of the current circulating on a line directed to an electrical load. This line can be both a power supply line and a line transmitting electrical signals, such as e.g. an instruction bus or a data communication cable. As a result, the "control means" mentioned herein may preferably comprise automatic microcontrollers, "smart" switches, i.e., equipped with a control logic, or other devices for regulating an electric quantity, which are equipped with a programmable processor.

Herein and hereinafter, "electrical load" further means any electrically powered device or apparatus that carries out its own well-defined function inside a home electrical system and, particularly, inside a home automation system. Electrical loads can therefore be, e.g., a light source, a sensor for environmental conditions or for detecting the presence of entities in a room, equipment equipped with electric motors, such as e.g. motorised shutters or curtains or fans, remotely controlled power outlets, heating and/or air conditioning equipment, alarm equipment, panels and instrumentation for commanding control means, etc.

Finally, the term "home automation device" means herein and hereinafter an assembly consisting of one or more electrical/electronic home automation components, such as control means, control units, sensors, light sources, power sockets, etc., which is jointly housed within a respective casing or shell, either permanently or removably.

Given the complexity of home automation applications, the need arises to house home automation components, such as, precisely, control means or units or even general electrical loads, such as sensors, light sources, etc., or home automation devices, inside a wall, e.g., of plasterboard, in a simple and appropriate manner and in such a way as not to impair the aesthetics of the environments for which such means are intended.

Object of the present invention is therefore to provide a kit for housing home automation devices that solves the problems of the known art, perfectly integrating in the architectural layout of a room of a house or space for office or commercial use.

Further object of the present invention is to provide a home automation device which can be easily integrated inside a wall of a building room or space.

Another object of the invention is to achieve the aforesaid results in a practical and economical manner, as well as in an extremely efficient manner.

### BRIEF SUMMARY OF THE INVENTION

These and other objects are reached by a housing kit for home automation devices, wherein the aforesaid kit is configured to be mounted and installed within a recess, or hollow space, formed inside a wall of a building room or space, preferably a plasterboard wall. The aforesaid kit comprises at least one plate, at least partially of magnetic or ferromagnetic material, wherein this plate can be fastened inside the hollow space of the wall of the room or space. The kit further comprises a home automation device comprising a housing shell for one or more home automation components, wherein said home automation device is shaped so that it can be inserted into the hollow space. Advantageously, the housing shell of the home automation device comprise one or more magnets for the detachable connection of the respective home automation device with at least the aforesaid plate, next to at least one side of the home automation device arranged inside the hollow space of the wall of a building room or space.

An advantage of this embodiment is that it allows to simply and removably integrate one or more home automation devices inside of a wall, e.g., but not exclusively in the form of a plasterboard panel, so that the installation and possible replacement of the home automation device is extremely simplified.

The above-mentioned objects are also achieved by a home automation device of the type comprising a housing shell for one or more home automation components, wherein such one or more home automation components form a whole with the aforesaid housing shell, i.e. they are constrained to the housing shell in such a way as to be reversibly or irreversibly integral to the same housing shell. Advantageously, the housing shell comprises one or more magnets shaped at least for the removable connection with a magnetic and/or ferromagnetic surface.

The application of a home automation device to a magnetic and/or ferromagnetic surface, e.g. contained in the wall recess, has the advantage of allowing its installation and possible removal in an extremely simple way.

It should be noted that, although it is not excluded that the electrical/electronic components of the home automation type (herein referred to as "home automation components" for brevity), which are housed inside the respective shell of the home automation device, can be removably placed in the same shell, a preferred and highly efficient embodiment of this invention provides that such home automation components are substantially immovably fastened within the respective shell so as to make such home automation components extremely easy to manipulate and, therefore, to install or replace by installing or replacing the entire home automation device.

According to an embodiment of the invention, the housing shell of the home automation device, whether or not belonging to the aforesaid housing kit for home automation devices, comprises at least one magnet which is supported by a respective adjustable screw, wherein the rotation of the adjustable screw determines the relative distance of the magnet with respect to the housing shell.

An advantage of this embodiment is that the adjustable screw allows to accurately adjust the position of the housing shell inside the hollow space in which the respective home automation device is installed. This allows to adapt the various shapes of different home automation devices to the hollow space formed in the wall of a building room or space with great simplicity and accuracy, in such a way that the electrical/electronic components of home automation type, which are housed in the shell of the respective home automation device and, in particular, their operating parts, can be placed at the inlet opening of the hollow space (recess) of the wall.

According to another embodiment of the invention, the housing shell of the home automation device further comprises one or more magnets for the removable connection with a closing panel, e.g. by means of a pair of magnets.

An advantage of this embodiment is that the hooking, through magnets, of the closing panel to the housing shell allows easy access to the inside of the same shell and also allows, possibly, the easy replaceability of the same panel if it is damaged.

In addition, the closing panel is made of a material selected from glass, metal, wood, plastic or other to the benefit of the aesthetics of the overall embodiment.

According to a further embodiment of the invention, the electrical connections for the home automation devices are passed within the hollow space of the wall.

Further characteristics of the invention can be deduced from the other dependent claims.

### BRIEF DESCRIPTION OF THE FIGURES

The characteristics and advantages of the present invention will become clear from reading the following description, provided by way of non-limiting example, with the aid of the figures depicted in the accompanying drawings, wherein:
- Figure 1 is a sectional view of a plasterboard tooled panel according to an embodiment of the invention, in particular for residential applications, in offices or shops;

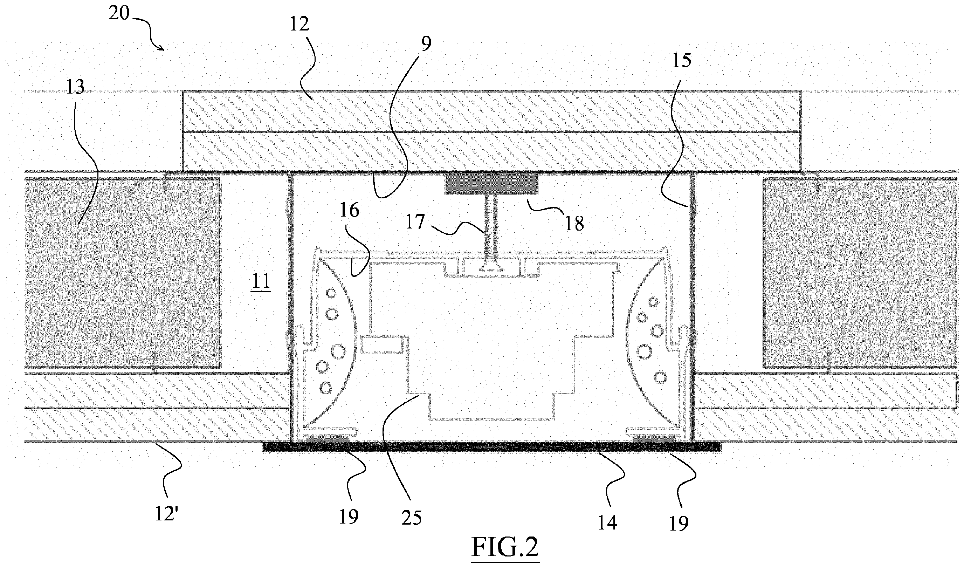

- Figure 2 is a sectional view of a plasterboard tooled plasterboard according to a further embodiment of the invention; and
- Figure 3 is a sectional view of a plasterboard tooled panel according to a further embodiment of the invention.

### DETAILED DESCRIPTION OF SOME EMBODIMENTS OF THE PRESENT INVENTION

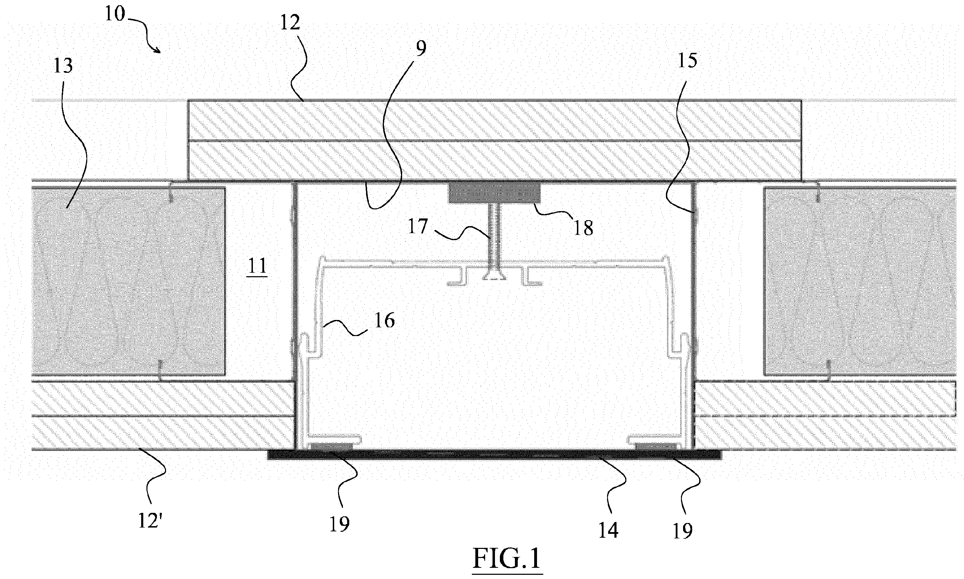

With reference first to figure 1, which is shown by way of example of the various possibilities of the invention, a housing kit for home automation devices is shown in a mounted configuration, wherein however no home automation device is visible, inside a wall 10 of a building, e.g. consisting of a plasterboard panel.

The housing kit for home automation devices, according to an embodiment of the invention, is configured to be mounted and installed inside a hollow space 11 formed in a wall 10 of a building room or space, e.g. but not exclusively, formed in a vertical wall defined by a panel consisting of a first 12 and a second 12' plasterboard sheet which are paired parallel to each other, so that the hollow space 11 is interposed between these plates 12, 12'.

In fact, the plasterboard panel, which may constitute a wall 10 of a building room or space, comprises a first 12 and a second 12' plasterboard sheet, wherein the aforesaid plasterboard sheets 12, 12' are coupled to each other so as to define an inner space 11.

In particular in the figures, the plasterboard sheets 12, 12' are preferably separated from each other by an insulating material layer 13.

The kit shown herein can also be assembled in any recess formed in a wall 10 of a building, regardless of how such wall is made, even if of suitable thickness. Walls of masonry, wood and even composite or other materials, provided a hollow space, or recess, 11 of suitable dimensions can be formed therein, allow the use of the above-mentioned kit.

The housing kit for home automation devices according to the present invention comprises at least one plate 9, at least partially made of magnetic and/or ferromagnetic material (i.e. comprising at least one magnetic and/or ferromagnetic surface), e.g. a steel plate, which can be fastened inside the hollow space 11 of the wall 10, e.g. on the wall opposite the respective inlet opening.

Preferably, as can be seen in the figures, the plate 9 is part of a box-like body 15 that is inserted into and adapted to the inner walls of the hollow space 11, to constitute a connecting surface for at least one home automation device, as will be seen.

The kit of the present invention further comprises at least one home automation device with a shell 16 for housing the electrical/electronic components of home automation type, such as e.g. control units 25 of a home automation system, environmental sensors, lighting sources, actuators, smart power sockets, terminal blocks or quick connectors 26 or others. The housing shell 16 of the home automation device depicted herein may be made through a box-like body of any material adapted to contain electrical or electronic components, such as plastic, metal or other material, even composite, or other set of materials.

It should be noted herein that the home automation device described herein, even separately from the kit depicted, is the object of this invention.

According to an aspect of the invention, the housing shell 16 and the respective home automation components 25, 26 of the home automation device de facto actually constitute a single entity, i.e. a whole, which can be easily manipulated by an operator and which can be easily inserted or extracted into/from the hollow space 11.

It should be noted that the home automation components 25, 26 can be removably or stably fastened to the respective shell 16, although the latter method is preferred because of the apparent improved handling of the resulting home automation device.

The present invention advantageously provides that the shell 16 of the home automation device comprises one or more magnets 18, 19, of which at least one magnet 18 is shaped for the connection of the same home automation device to a magnetic and/or ferromagnetic surface and, in particular, in the case of the kit described herein, for the connection to the magnetic and/or ferromagnetic surface of the plate 9 or box-like body 15, which are placed inside a recess 11 of a wall.

According to a preferred embodiment of the home automation device and the respective housing kit of the present invention, the shell 16 of the home automation device further comprises magnets 19, preferably two magnets 19, shaped to allow the removable connection with a closing panel 14.

In the embodiments of the kit that are shown herein according to the invention, the housing shell 16 is thus connectable by means of magnets, on one side, inside the box-like body 15 or in any case inside the hollow space 11, thanks to the plate 9, and it is re-closable on the opposite side, i.e. on the side facing the inlet opening of the hollow space 11, by means of a closing panel 14.

In the embodiment shown in the accompanying figures herein, the hollow space 11 is defined by the plasterboard sheets 12, 12' of the wall (panel) 10 and houses a box-like body 15, or at least one plate 9, with at least one surface of magnetic and/or ferromagnetic material, which is configured to house home automation devices of the type stated herein, which can be connected by means of magnets 18, 19, on one side, to the magnetic and/or ferromagnetic surface, on the other side, to the closing panel 14.

This closing panel 14, in general, can be made of the most diverse materials such as glass, metal, wood, plastic or other suitable material, or a combination thereof.

The hooking through magnets 19 of the closing panel 14 to the housing shell 16 allows easy access to the inside of the same shell and also allows, possibly, the same panel 14 to be easily replaced if damaged.

According to a preferred aspect of the invention, the housing shell 16 comprises at least one magnet 18 that is supported by the end region of a respective adjustable screw 17 which is rotatable inside an internal screw made in the same shell 16. The rotation of the adjustable screw 17, whether screwing or unscrewing with respect to the internal screw formed in the housing shell 16, modifies and determines the relative distance of the magnet 18 with respect to the housing shell 16.

As stated, the use of an adjustable screw 17 to move the magnet 18 away from or closer to the shell 16 allows to easily adjust the distance of the same housing shell 16 from the magnetic and/or ferromagnetic surface with which the magnet 18 engages and, this way, to adjust the position of the shell 16 with respect to at least one inner wall of the hollow space 11, i.e. of the wall on which the aforesaid magnetic and/or ferromagnetic surface is present. In the event that the home automation device is part of a kit according to the present invention, this solution allows to adjust the distance between the housing shell 16 and at least one inner wall of the hollow space 11 to which the plate 9 is fastened, possibly belonging to the box-like body 15, simply by acting on the adjustable screw 17.

Depending on the thread pitch of the adjustable screw 17, it is possible to vary the position of the housing shell 16 inside the hollow space 11 within the wall 10 with greater or lesser accuracy.

As will be understood, the insertion or replacement of a home automation device, according to the present invention, inside the hollow space 11, is therefore extremely simplified since it is sufficient to insert the home automation device which, as stated, is as a whole consisting of the housing shell 16 with the respective home automation components 25, 26 inside, to magnetically hook the magnet 18 to the respective magnetic and/or ferromagnetic surface; e.g., in the case of a kit, according to the present invention, belonging to a plate 9 or box-like body 15, the adjustable screw 17 is then rotated until the shell 16 and, therefore, the entire home automation device, is positioned inside this hollow space 11, as provided by the installer.

It should be noted that although it has been described herein that only one magnet 18 is designed to connect the housing shell 16 to a magnetic and/or ferromagnetic surface fastened internally to the hollow space 11 of the wall of a building room or space, nothing inhibits the presence of multiple magnets preferably placed on respective adjusting screws and also arranged on adjacent sides of the shell 16, which allow fine-tuning of the position of the shell 16 with respect to the hollow space 11, even along directions incident to each other.

The electrical connections, if any, for possible further home automation devices may be passed inside the hollow space 11.

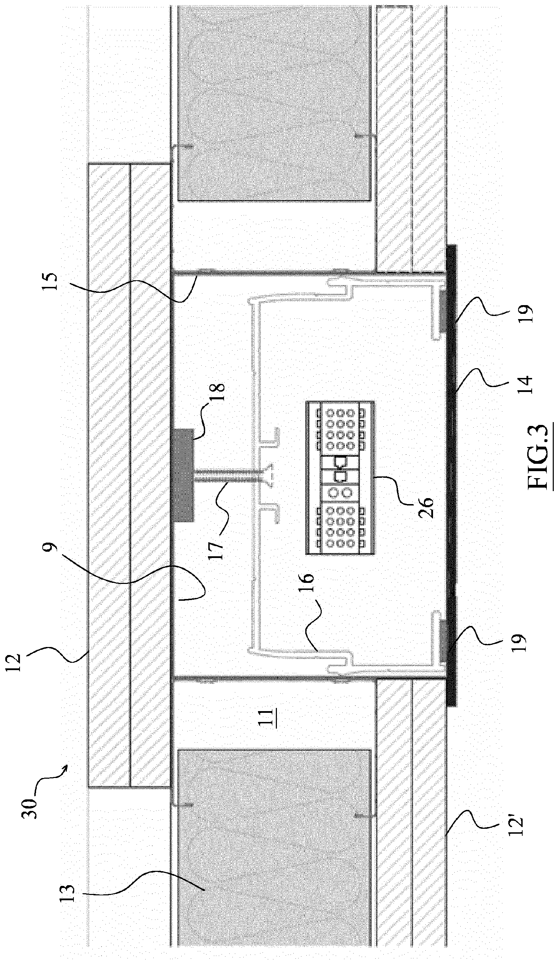

Figure 3, which is still a sectional view of an embodiment of the invention, shows a plasterboard panel 30 which houses a housing shell 16 inside which a home automation component 26 is further provided, which consists of quick connections, e.g. a terminal block, for wiring of the home automation system.

It should be noted that the home automation components 25, 26 can both be housed inside the same shell 16.

Obviously, modifications or improvements that are dictated by contingent or particular reasons may be made to the invention as described, without thereby departing from the scope of the invention as claimed below.

## Claims

1. Housing kit for home automation devices, wherein the aforesaid kit is configured to be mounted and installed inside a hollow space (11) formed inside a wall (10) of a building room or space, wherein the aforesaid kit comprises at least one plate (9) at least partially made of magnetic and/or ferromagnetic material, wherein this at least one plate (9) can be fastened within the hollow space (11) of the wall of the room or space, and a home automation device (16, 25, 26) comprising a housing shell (16) for one or more home automation components (25, 26), wherein said home automation device (16, 25, 26) is shaped so that it can be inserted into the hollow space (11), **characterised in that** said housing shell (16) comprises one or more magnets (18, 19) for the removable connection of said home automation device (16, 25, 26) to at least said at least one plate (9) next to at least one side of said home automation device (16, 25, 26) arranged inside said hollow space (11).

2. Housing kit for home automation devices according to claim 1, wherein the aforesaid housing shell (16) is connected to said at least one plate (9) by at least one magnet (18) which is supported by a respective adjustable screw (17), wherein the rotation of the adjustable screw (17) determines the relative distance of the magnet (18) with respect to the housing shell (16).

3. Housing kit for home automation devices according to claim 1 or 2, wherein said housing shell (16) comprises magnets (19) for the removable connection of said home automation device (16, 25, 26) with a closing panel (14), at the side of said home automation device (16, 25; 26) facing the inlet opening of said hollow space (11).

4. Housing kit for home automation devices according to one of the preceding claims, wherein the aforesaid plate (9) at least partially made of magnetic or ferromagnetic material is part of a box-like body (15) shaped to be inserted into the hollow space (11).

5. Housing kit for home automation devices according to one of the preceding claims, wherein the electrical connections for the home automation devices are passed inside the hollow space (11) formed in the aforesaid wall of a room or space.

6. Housing kit for home automation devices according to one of the preceding claims, wherein the aforesaid closing panel (14) is made of a material selected from glass, metal, wood, plastic or other.

7. Housing kit for home automation devices according to claim 1, wherein the hollow space (11) is formed between a first (12) and a second plasterboard sheet.

8. Home automation device of the type comprising a housing shell (16) for one or more home automation components (25, 26), wherein such one or more home automation components (25, 26) form a whole with the housing shell (16), **characterised in that** the housing shell (16) comprises magnets (18, 19) at least for the removable connection to a magnetic and/or ferromagnetic surface.

9. Home automation device according to claim 8, wherein the said housing shell (16) comprises at least one magnet (18) which is supported by a respective adjustable screw (17), wherein the rotation of the adjustable screw (17) determines the relative distance of the magnet (18) with respect to the housing shell (16).

10. Home automation device according to one of claims 8 or 9, wherein the housing shell (16) further comprises one or more magnets (19) for the detachable connection with a closing panel (14).

11. Home automation device according to claim 10, wherein the closing panel (14) is made of a material selected from glass, metal, wood, plastic or other.

12. Home automation device according to one of the preceding claims 8 to 11, wherein the aforesaid one or more home automation components (25, 26) are removably or irreversibly constrained to the respective housing shell (16).
